# EUROPEAN PATENT SPECIFICATION

(11) **EP 0 845 789 B1**
(45) Date of publication and mention of the grant of the patent: **23.05.2001**
(21) Application number: 97309405.5
(22) Date of filing: 21.11.1997
(51) Int. Cl.: G21F 9/30, C03B 5/02, C03B 5/00

(54) **Method of melting treatment of radioactive solid wastes**
Schmelzverfahren von radioaktiven festen Abfällen
Procédé pour la fusion de déchets solides radioactifs

(30) Priority: 22.11.1996 JP 31157996
(43) Date of publication of application: 03.06.1998
(73) Proprietor: JAPAN NUCLEAR CYCLE DEVELOPMENT INSTITUTE, Naka-gun Ibaraki-ken (JP)
(72) Inventor: Kobayashi, Hiroaki, Ibaraki-ken (JP)
(74) Representative: Kyle, Diana

(56) References cited:
- EP-A- 0 640 992
- WO-A-97/21500
- US-A- 5 564 102
- DATABASE WPI Section Ch, Week 9444 Derwent Publications Ltd., London, GB; Class K07, AN 94-351825 XP002058035 & JP 06 273 587 A (NIPPON GLASS CO LTD) , 30 September 1994

## Description

### BACKGROUND OF THE INVENTION

The present invention relates to a method of melting treatment of radioactive solid wastes generated from nuclear facilities and the like, in which the radioactive solid wastes are induction-heated efficiently by using a cold crucible induction melting furnace so that the volume of the wastes is reduced and the wastes are solidified.

The nuclear facilities and the like generate large amounts of radioactive solid wastes which contain various kinds of substances such as combustibles, metals, glass and other non-combustibles mixed therein. As a method of melting the wastes collectively in a simple manner, there is the one that was proposed by the applicant of the present application (see the Japanese Patent Laid-open No. 7-63895/ 1995, hereinafter referred to as the "prior art method (1)").

This prior art method (1) makes use of a cold crucible induction melting furnace having a structure in which a slit-divided water-cooling type metallic cold crucible is disposed within a water-cooling type high-frequency coil. When radioactive solid wastes are charged into the melting furnace and a high-frequency current is supplied to the high-frequency coil, electrically conductive substances such as metals contained in the solid wastes are melted first by being induction-heated. The remaining portion of the wastes surrounding the electrically conductive substances and having a low electrical conductivity is indirectly heated by the heat generated with the induction heating. That is, the metals acts as a starting source of heating and melting the wastes so that the wastes reach a molten state entirely.

By the above-described prior art method (1), when the metals are melted, since a floating force works on the molten metal itself by the action of an electromagnetic field, the molten metal does not come into direct contact with the crucible. Also when the glass is melted, the contact surface of the molten glass with the crucible is cooled to become a solid layer (skull layer) and the high-temperature molten glass does not come into direct contact with the crucible. Thus, no high-temperature erosion of the crucible takes place. Further, since the crucible itself is water-cooled, it can melt the molten matter at a high temperature without being limited to its heat-resistance temperature.

On the other hand, though a similar cold crucible induction melting furnace as described-above is employed, a method of melting treatment of a target melting substance having a low electrical conductivity such as glass has been proposed by the applicant of the present application (see Japanese Patent Laid-open No.7-20288/1995, hereinafter referred to as the "prior art method (2)"). Namely, an electrically conductive body such as silicon carbide or the like having a higher melting point than the glass substance is inserted together with the glass substance into the melting furnace, a high-frequency current is supplied to the high-frequency coil so that the electrically conductive body is first heated to thereby indirectly heat the glass substance, the electrically conductive body is drawn out from the furnace after a portion of the glass substance has been melted, and then the induction heating through the molten glass is continuously maintained until the whole of the glass substance becomes a molten state.

However, in the case of the above-described prior art method (1), in order for metals within the melting furnace to be induction-heated preferentially and effectively, it is necessary to separate the metals in the solid wastes and put the separated metals at a place within the melting furnace where they can easily be induction-heated. Further, in the case of the above-described prior art method (2), it is necessary to prepare the electrically conductive body such as silicon carbide or the like and to provide a means for inserting and drawing out the electrically conductive body into and from the melting furnace.
JP-A-06273587 describes a disposing device for radioactive waste in which a plasma torch is provided.
A plasma flow is injected against a non-molten substance, floating on the upper part of molten waste in a container for melting to melt the non-molten substance.

### SUMMARY OF THE INVENTION

An object of the present invention is therefore to provide a method of melting treatment of radioactive solid wastes in which there is no limitation of the substances of the radioactive solid wastes to be melted, the whole of the solid wastes can be melted efficiently, uniformly and quickly, even though the solid wastes contain various kinds of substances in a mixed state, the separation of metals from the solid wastes and any specific operation of disposing the separated metals into the melting furnace are not required, and the insertion and drawing out of an electrically conductive body such as silicon carbide into and from the melting furnace are not required.

Thus, the present invention provides a method of melting treatment of radioactive solid wastes, wherein the radioactive solid wastes are charged into a water-cooling type cold crucible induction melting furnace disposed within a high-frequency coil and a high-frequency electrical current is supplied to the high-frequency coil surrounding the melting furnace to melt the solid wastes by being induction-heated, and a hot plasma is injected toward the solid wastes in the furnace from above the solid wastes, characterised in that an oxidizing gas, a reducing gas or a corrosive gas is selectively used as a plasma gas for said hot plasma thereby to promote or control the melting reaction of the solid wastes in said melting furnace.

In a particular embodiment of the present method the hot plasma is injected toward the solid wastes in the furnace from above the solid wastes to heat and melt a portion of the solid wastes initially and then the high-frequency electrical current is supplied to the high-frequency coil to induction-heat the whole of the solid wastes in the furnace.

In the present invention described above, even when the solid wastes contain waste components of various kinds of substances in a mixed state, a portion of such solid wastes can be melted, irrespective of the kinds and the electrical conductivity of the substances in the wastes, by injecting the hot plasma toward the solid wastes charged in the furnace to initially heat the wastes. Accordingly, by supplying high-frequency current to the high-frequency coil in a condition in which the solid wastes are partially melted by the initial heating with the hot plasma, the induction heating of the solid wastes can be effectively carried out and the whole of the solid wastes in the furnace can be melted uniformly and quickly.

After the initial heating with the hot plasma has been carried out, the induction heating by the high-frequency coil progresses so that the injection of the hot plasma may be suspended. However, the injection of the hot plasma may be continuously carried out while the induction heating by the high-frequency coil is in progress thereby making use of the hot plasma as an auxiliary heating source of the induction heating by the high-frequency coil.

### BRIEF DESCRIPTION OF THE DRAWING

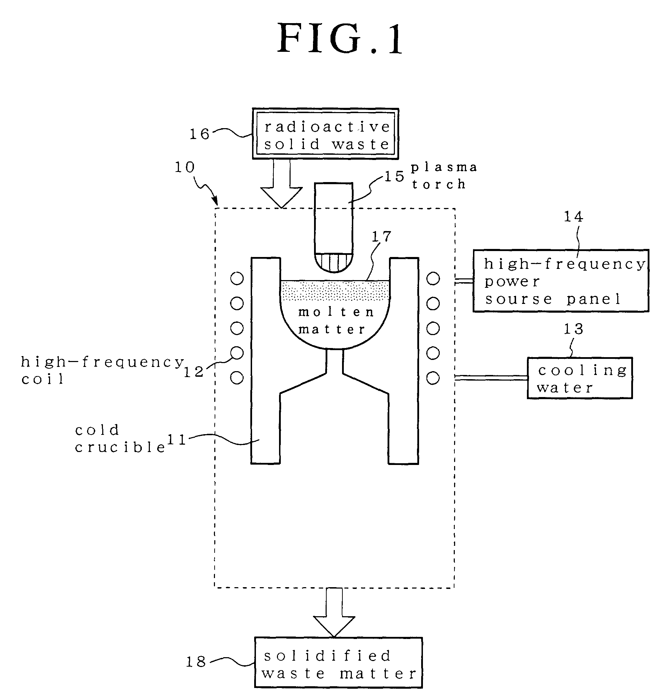

Fig. 1 is an illustrative view of one example of a cold crucible induction melting furnace to be used for carrying out the method of the present invention.

### PREFERRED EMBODIMENTS OF THE INVENTION

Fig. 1 shows a schematic structure of one example of a cold crucible induction melting furnace 10 to be used for carrying out the method of the present invention. A slit-divided water-cooling type copper cold crucible 11 is disposed within a water-cooling type high-frequency coil 12, as in the case of the cold crucible induction melting furnace to be used in the prior art method (1). The cold crucible 11 and the high-frequency coil 12 are cooled by the circulation of cooling water 13 and a predetermined frequency is supplied to the high-frequency coil 12 from a high-frequency power source panel 14.

In the induction melting furnace 10 to be used in the present invention, there is arranged a plasma torch 15 which is adapted to inject a hot plasma toward the interior of the furnace at a position above the cold crucible 11. The hot plasma is widely used in fusion-cutting and welding as a high-temperature melting means. The typical plasma torch 15 has the structure such that an arc discharge is caused to generate between an anode and a cathode to thereby make a gas to be plasmatic and the arc is blown out of the torch by a plasmatic gas flow to thereby inject a hot plasma from a cathode nozzle. In the present invention, even when the target substance to be melted is not electrically conductive, a non-transition type DC plasma or a high-frequency plasma capable of producing a plasma is preferable used to melt such a target substance.

As shown in Fig. 1, radioactive solid wastes 16 charged into the cold crucible 11 are partly melted (see the shaded portion in the figure) at a position near the surface thereof by initial heating due to the hot plasma injected from the plasma torch. When this state has been obtained, the injection of the hot plasma is stopped and a high-frequency electrical current is then immediately supplied to the high-frequency coil 12 from the high-frequency power source panel 14 thereby induction-heating the molten portion. By this induction heating, the remaining portion of the solid wastes within the furnace is also heated and melted and as a result, the whole of the solid wastes becomes a molten matter 17 and the induction heating progresses efficiently and quickly. Next, the molten matter 17 is poured into a canister or a stainless steel vessel (not shown) so as to be cooled and solidified to become a solidified waste matter 18.

Although the above-described example makes use of the hot plasma as a means for carrying out a stabilized initial heating operation, it is also possible to make use of the hot plasma as an auxiliary heat source of induction heating by injecting the hot plasma simultaneously with supplying the high-frequency current to the high-frequency coil.

Further, by selectively using an oxidizing gas such as oxygen gas, a reducing gas such as hydrogen gas and a corrosive gas such as hydrogen fluoride gas as a plasma gas to be used for generating and injecting the hot plasma, it is possible to promote or control the melting reaction of the solid wastes. For example, when the oxygen gas is used as a plasma gas, the oxidization reaction of the molten matter can be promoted. When the hydrogen gas is used for the prevention of oxidization at the time of melting metals, the generation of slag and the like can be controlled. When the hydrogen fluoride gas is used for volatilizing and separating radioactive substances in the molten matter, the decontamination of the molten matter can be made possible.

The present invention will now be described by way of experimental example. The cold crucible induction melting furnace used in the experimental example had the same structure as that which is shown in Fig. 1. The inner diameter of the furnace was 100 mm, the depth thereof was 150 mm and the furnace was divided into ten(10) segments. The size of the high-frequency coil was such that the outer diameter of the coil was 170 mm, the height thereof was 100 mm and the number of turns of the coil was seven (7). The frequency of a high-frequency electrical current to be supplied to the coil was 4 MHz. Further, a plasma torch (non-transition type; DC plasma; power source current of 350A; nitrogen gas as plasma gas, 30 liters/min; and carbon dioxide gas, 8 liters/min) was provided above the furnace and 1000 g of glass beads as radioactive solid wastes were charged into the furnace.

A hot plasma generated from the torch was injected toward the surface of glass beads within the furnace and, at the point of time when about 50% of surface area of the glass beads was heated and melted, a high-frequency electrical current was applied on the high-frequency coil. As a result, the self-induction heating of the glass beads was maintained and even after the power source of the hot plasma torch was interrupted, the melting operation was kept continued and progressed and the overall melting of the glass beads was possible at a surface temperature of about 1300 °C.

Further, when 200g of glass beads were additionally charged into the furnace and the hot plasma was injected on the surface of the glass beads, the added glass beads were entirely melted again in about two (2) minutes. In this connection, in view of the fact that when the hot plasma was not injected after the additional charging of the glass beads, it took more than five (5) minutes for the glass beads to be entirely melted, it was found that the injection of the hot plasma was effective as an auxiliary heating source during the induction heating by means of the cold crucible induction melting furnace.

It should be noted that the test conditions, the size of the furnace, the number of segments into which the furnace was divided, the size of the high-frequency coil, the number of turns of the high-frequency coil, the frequency of the high-frequency electrical current, the kind of the plasma torch and the values of electrical current and the like used in this experimental example were determined to be the optimum conditions for the quality of the solid wastes to be melted and the method of the present invention is not limited to these conditions.

As will be understood from the above description, in the present invention, when radioactive solid wastes are melted by using a cold crucible induction melting furnace, a hot plasma is injected from above the solid wastes charged into the melting furnace toward the solid wastes as an initial heating operation to thereby heat and melt a portion of the solid wastes and then the partly-melted solid wastes are induction-heated by the high-frequency coil or a hot plasma is used as an auxiliary heating source for the induction heating by the high-frequency coil. As a result, even when the solid wastes contain various kinds of substances in a mixed state, the whole of them can be melted efficiently and quickly.

Accordingly, it becomes possible to provide a method of melting treatment of solid wastes which does not require the separation of metals contained in the solid wastes and any specific arrangement of the separated metals within the melting furnace and which also does not require the insertion and drawing out of an electrically conductive body such as silicon carbide into and from the melting furnace.

## Claims

1. A method of melting treatment of radioactive solid wastes, wherein the radioactive solid wastes (16) are charged into a water-cooling type cold crucible induction melting furnace (10) disposed within a high-frequency coil (12) and a high-frequency electrical current is supplied to the high-frequency coil (12) surrounding the melting furnace to melt the solid wastes by being induction-heated, and a hot plasma is injected toward the solid wastes in the furnace from above the solid wastes, characterised in that an oxidizing gas, a reducing gas or a corrosive gas is selectively used as a plasma gas for said hot plasma thereby to promote or control the melting reaction of the solid wastes in said melting furnace.

2. A method of melting treatment according to claim 1, wherein said hot plasma is initially injected to heat and melt a portion of the solid wastes and then the high-frequency electrical current is supplied to the high-frequency coil (12) to induction-heat the whole of the solid wastes in the furnace.

3. A method of melting treatment according to claim 1, wherein said hot plasma is injected to heat and melt a portion of the solid wastes while supplying the high-frequency electrical current to the high-frequency coil (12) to induction-heat the whole of the solid wastes in the furnace, whereby the hot plasma is used as an auxiliary heating source during the induction heating of the solid wastes by the high frequency coil.

## Patentansprüche

1. Verfahren zum Schmelzen radioaktiver fester Abfälle, bei welchem die radioaktiven festen Abfälle (16) in einen Induktions-Kalttiegelschmelzofen (10) mit Wasserkühlung eingeladen werden, der in einer Hochfrequenzspule (12) angeordnet ist, und ein elektrischer Hochfrequenzstrom auf die den Schmelzofen umgebende Hochfrequenzspule (12) geleitet wird, um die festen Abfälle durch Wirbelstromerwärmung zu schmelzen, und bei welchem ein heißes Plasma auf die festen Abfälle in dem Ofen von oberhalb der festen Abfälle gespitzt wird, dadurch gekennzeichnet, daß ein oxidierendes Gas, ein reduzierendes Gas oder ein korrodierendes Gas selektiv als Plasmagas für das heiße Plasma benutzt wird, um dadurch die Schmelzreaktion der festen Abfälle in dem Schmelzofen zu fördern oder zu steuern.

2. Schmelzverfahren gemäß Anspruch 1, bei welchem heißes Plasma anfänglich eingespritzt wird, um einen Teil der festen Abfälle zu erhitzen und zu schmelzen, und bei welchem dann der elektrische Hochfrequenzstrom auf die Hochfrequenzspule (12) geleitet wird, um die gesamten festen Abfälle in dem Ofen durch Wirbelstromerwärmung zu erhitzen.

3. Schmelzverfahren gemäß Anspruch 1, bei welchem heißes Plasma zur Erwärmung und zum Schmelzen eines Teils der festen Abfälle eingespritzt wird, während der elektrische Hochfrequenzstrom auf die Hochfrequenzspule (12) geleitet wird, um die gesamten festen Abfälle in dem Ofen durch Wirbelstromerwärmung zu erhitzen, wobei das heiße Plasma als eine Nebenheizquelle während der Wirbelstromerwärmung der festen Abfälle durch die Hochfrequenzspule verwendet wird.

## Revendications

1. Procédé de traitement par fusion de déchets solides radioactifs, dans lequel les déchets solides radioactifs (16) sont déposés dans un four de fusion par induction à creuset froid de type refroidissement à l'eau (10) disposé à l'intérieur d'une bobine de fréquence élevée (12) et un courant électrique de fréquence élevée est fourni à la bobine de fréquence élevée (12) entourant le four de fusion pour faire fondre les déchets solides en les chauffant par induction, et un plasma chaud est injecté vers les déchets solides dans le four à partir du dessus des déchets solides, caractérisé en ce que l'on utilise sélectivement comme gaz de plasma pour ledit plasma chaud un gaz oxydant, un gaz réducteur ou un gaz corrosif pour promouvoir ou régler par là la réaction de fusion des déchets solides dans ledit four de fusion.

2. Procédé de traitement par fusion selon la revendication 1, dans lequel ledit plasma chaud est initialement injecté pour chauffer et faire fondre une partie des déchets solides et le courant électrique de fréquence élevée est ensuite fourni à la bobine de fréquence élevée (12) pour chauffer par induction la totalité des déchets solides dans le four.

3. Procédé de traitement par fusion selon la revendication 1, dans lequel ledit plasma chaud est injecté pour chauffer et faire fondre une partie des déchets solides tout en fournissant le courant électrique de fréquence élevée à la bobine de fréquence élevée (12) pour chauffer par induction la totalité des déchets solides dans le four, le plasma chaud est par là utilisé comme source de chauffage auxiliaire pendant le chauffage par induction des déchets solides par la bobine de fréquence élevée.
